# EUROPÄISCHE PATENTSCHRIFT

(11) **EP 2 210 005 B1**
(45) Veröffentlichungstag und Bekanntmachung des Hinweises auf die Patenterteilung: **08.02.2012**
(21) Anmeldenummer: 08804527.3
(22) Anmeldetag: 22.09.2008
(51) Int. Cl.: F16C 17/04, F16C 33/10, F16C 33/14, F01D 25/16, F02C 6/12

(54) **AXIALLAGER, INSBESONDERE FÜR EINEN TURBOLADER**
AXIAL BEARING, PARTICULARLY FOR A TURBOCHARGER
PALIER AXIAL, EN PARTICULIER POUR UN TURBOCOMPRESSEUR

(30) Priorität: 31.10.2007 DE 102007052101
(43) Veröffentlichungstag der Anmeldung: 28.07.2010
(73) Patentinhaber: Continental Automotive GmbH, 30165 Hannover (DE)
(72) Erfinder: FRANKENSTEIN, Dirk, 67550 Worms (DE); HAUSCHILD, Dag, 77654 Offenburg (DE); HAUSER, Johann, 93170 Bernhardswald (DE); HELD, Jochen, 67295 Bolanden-Weierhof (DE); NOWACK, Stefan, 67292 Kirchheimbolanden (DE); VIESSMANN, Konrad, 90562 Kalchreuth (DE)
(86) Internationale Anmeldenummer: PCT/EP2008/062601
(87) Internationale Veröffentlichungsnummer: WO 2009/056403

(56) Entgegenhaltungen:
- DE-A1- 19 641 673
- GB-A- 1 293 665
- GB-A- 2 200 412
- US-A- 4 639 148
- US-A1- 2002 122 610

## Beschreibung

Die Erfindung betrifft ein Axiallager, welches insbesondere bei Turboladern, beispielsweise in Kraftfahrzeugen eingesetzt werden kann.

Im Allgemeinen dienen Turbolader dazu den Wirkungsgrad eines Verbrennungsmotors zu verbessern und damit dessen Leistung zu steigern. In dem Gehäuse des Turboladers ist hierzu eine Welle um die Längsachse, beispielsweise mittels zweier Radiallager, drehbar gelagert. Auf der Welle sind ein Turbinenrad und ein Verdichterrad angeordnet. Aufgrund von Fluidströmungen, die an dem Turbinenrad und dem Verdichterrad angreifen, können hierbei jedoch starke Axialkräfte auftreten. Solche Axialkräfte können von den Radiallagern nicht geeignet aufgenommen werden, so dass normalerweise wenigstens ein zusätzliches Axiallager vorgesehen wird.

Im Allgemeinen werden an eine Lagerung der Welle eines Turboladers sehr hohe Anforderungen gestellt. Dies ist dadurch bedingt, dass ein Turbolader verhältnismäßig hohen Temperaturen ausgesetzt ist, da das Turbinenrad über heiße Abgas des Motors angetrieben wird. Des Weiteren erreicht die Welle eines Turboladers sehr hohe Drehzahlen von beispielsweise bis zu 300.000 U/min. Hierdurch müssen die sich drehenden Teile des Turboladers sehr genau ausgewuchtet sein, um das Auftreten von Schwingungen möglichst gering zu halten.

Aus dem Stand der Technik ist bekannt, dass bei dem für Axiallager angewandten Fertigungsverfahren die Segmente des Lagers durch Tiefprägen der umliegenden Flächen herausgestellt werden. Die Verfestigung des Werkstoffs durch die Verformung bereitet jedoch an dieser Stelle Probleme. Je stärker der Werkstoff bewegt werden muss bzw. je mehr Werkstoff zur Seite gedrängt werden muss, umso härter wird der Werkstoff. Dies hat zur Folge, dass ein stärkerer Verschleiß bei dem entsprechenden Tiefprägewerkzeug auftritt und außerdem mehr Kraft beim Tieferprägen notwendig ist.

Das Dokument US 4, 639, 148 A offenbart ein Axiallager mit einer mittig angeordneten Durchtrittsöffnung und mit Lagersegmenten an beiden Seiten. Die Segmente sind jeweils an einem als Vertiefung ausgebildeten Segmentabschnitt angeordnet.

So offenbart beispielsweise das Dokument US 2002/0122610 A1 ein dynamisches Drucklager, das auf beiden Seiten Vertiefungen und dazwischen ausgebildete Erhöhungen aufweist, die jeweils in Pfeilform auf der Oberfläche so angeordnet sind, dass sich die Erhöhungen und Vertiefungen auf beiden Seiten jeweils überdecken.

Auch das Dokument DE 196 41 673 A1 offenbart eine Axiallager mit jeweils mehreren auf der Oberseite und der Unterseite angeordneten, als ebene Rastflächen bezeichnete Lagersegmenten, zwischen denen sich jeweils radial angeordnete Schmierölnuten und Keilflächen erstrecken. Auch hier überdecken sich die Lagersegmente beider Seiten vollständig. Die Einprägungstiefen der Schmierölnuten und deren Flächenanteile sind dem entsprechend vergleichsweise gering.

Die Beschränkungen durch diese Probleme wurden bisher in Kauf genommen. Somit waren nur bestimmte Werkstoffe und Einprägtiefen realisierbar.

Demnach ist es die Aufgabe der vorliegenden Erfindung, ein verbessertes Axiallager bereitzustellen.

Diese Aufgabe wird durch ein Axiallager mit den Merkmalen des Patentanspruchs 1 gelöst.

Demgemäß wird erfindungsgemäß ein Axiallager bereitgestellt, das im Wesentlichen scheibenförmige Gestalt mit einer Vorderseite und einer Rückseite, sowie eine mittig angeordnete Durchtrittsöffnung aufweist, wobei das Axiallager auf seiner Vorderseite und seiner Rückseite jeweils mindestens ein oder mehrere Segmente aufweist. Die Segmente sind jeweils in einem als Vertiefung ausgebildeten, um die Durchtrittsöffnung umlaufenden Segmentabschnitt angeordnet, wobei die Segmente auf den gegenüberliegenden Seiten jeweils derart vollständig zueinander versetzt angeordnet sind, so dass die gegenüberliegenden Segmente mit ihren Enden direkt aneinander angrenzen oder dass jeweils ein Spalt zwischen den Enden der gegenüberliegenden Segmente gegeben ist.

Gemäß der Erfindung sind die Segmente in Segmentabschnitten des Axiallagers angeordnet, wobei die Segmentabschnitte umlaufend um die Durchtrittsöffnung des Axiallagers angeordnet sind. Die Segmentabschnitte bilden dabei jeweils eine Vertiefung in der Schmieröl zum Schmieren des Axiallagers aufgenommen wird. Die Form der Segmente kann dabei keilförmig ausgebildet sein und wahlweise können die Segmente auf der Oberseite zusätzlich mit wenigstens einer Schräge versehen sein. Prinzipiell können die Segmente jedoch jede Form aufweisen, die geeignet ist eine vorgegebene Funktion oder Einsatzzweck zu erfüllen.

Alle jeweils auf den gegenüberliegenden Seiten angeordnete Segmente sind vollständig zueinander versetzt angeordnet. Mit anderen Worten, die gegenüberliegenden Segmente grenzen mit ihren Enden direkt aneinander an, überlappen sich nicht oder lassen gar jeweils ein Spalt zwischen den Enden der gegenüberliegenden Segmente frei. Dies hat den Vorteil, dass das Material, das auf einer Seite des Lagers zusammengedrückt wird, auf der gegenüberliegenden Seite direkt herausgedrückt werden kann, um dort ein entsprechendes Segmente auszubilden. Auf diese Weise muss nur wenig Material zum Umformen bewegt werden.

Das Axiallager hat dabei den Vorteil, dass durch die vollständig versetzte Anordnung der Segmente auf den gegenüberliegenden Seiten weniger Material verdrängt werden muss als dies beispielsweise im Stand der Technik der Fall ist, wo die Segmente direkt gegenüberliegend angeordnet sind. Dadurch wird das Material weniger hart, so dass ein geringerer Verschleiß an dem entsprechenden Prägewerkzeug zum Herstellen der Segmente entsteht. Außerdem ist weniger Kraft beim Prägen erforderlich und es können größere Einprägtiefen erreicht werden. Zudem können auch Werkstoffe zum Herstellen des Axiallagers verwendet werden, die eine geringere Umformbarkeit aufweisen, als die Werkstoffe, die bisher bei herkömmlichen Axiallagern verwendet werden. Ein weiterer Vorteil ist, dass durch die vollständig versetzte Anordnung der Segmente mehr Gestaltungsmöglichkeiten in Bezug auf das Design des Axiallagers gegeben sind.

Vorteilhafte Ausgestaltungen und Weiterbildungen der Erfindung ergeben sich aus den Unteransprüchen sowie der Beschreibung unter Bezugnahme auf die Zeichnungen.

In einer anderen erfindungsgemäßen Ausführungsform ist die Durchtrittsöffnung des Axiallagers auf der Vorder- und/oder Rückseite mit einem Innenbund versehen. Der Innenbund kann dabei den Durchtritt von Schmieröl aus dem Segmentabschnitt hin zu der Durchtrittsöffnung zumindest reduzieren oder im Wesentlichen verhindern, so dass das Schmieröl stattdessen in dem jeweiligen Segmentabschnitt zum Schmieren des Axiallagers verbleibt. Je größer die Einprägtiefe der Segmente bzw. des Segmentabschnitts ist, umso mehr Schmieröl kann in dem Segmentabschnitt aufgenommen werden.

In einer weiteren erfindungsgemäßen Ausführungsform weist das Axiallager wenigstens eine Öltasche auf einer oder beiden Seiten des Axiallagers auf, wobei die Öltasche über einen Kanal mit den Segmentabschnitten auf beiden Seiten verbunden ist, beispielsweise über eine Nut. Der Kanal hat den Vorteil, dass er beispielsweise durch Einfräsen oder Einprägen einer Nut sehr leicht hergestellt werden kann, wobei die Nut nach dem Einfräsen leicht gesäubert werden kann und nicht durch Späne verstopfen kann, wie beispielsweise eine Bohrung. Beim Einprägen ist eine Säuberung nicht notwendig.

Gemäß einer anderen erfindungsgemäßen Ausführungsform werden die Segmente durch Tiefprägen hergestellt. Das Tiefprägen hat den Vorteil, dass die Segmente sehr einfach und verhältnismäßig schnell und preisgünstig gefertigt werden können, im Vergleich beispielsweise zu einem spanabhebenden Verfahren.

In einer anderen erfindungsgemäßen Ausführungsform ist das Axiallager für einen Turbolader vorgesehen, wobei es jedoch auch bei jeder anderen Einrichtung eingesetzt werden kann, in welcher Axiallager mit Segmenten benötigt werden.

Die Erfindung wird nachfolgend anhand der in den schematischen Figuren der Zeichnungen angegebenen Ausführungsbeispiele näher erläutert. Es zeigen:
- Fig. 1: eine perspektivische Schnittansicht eines Axiallagers einer Ausführungsform der Erfindung;
- Fig. 2: eine schematische Ansicht eines Axiallagers gemäß dem Stand der Technik, das entlang des mittleren Durchmessers abgewickelt wurde, und
- Fig. 3: eine schematische Ansicht eines Axiallagers gemäß der Erfindung, das entlang des mittleren Durchmessers abgewickelt wurde.

In allen Figuren sind gleiche bzw. funktionsgleiche Elemente und Vorrichtungen - sofern nichts anderes angegeben ist - mit denselben Bezugszeichen versehen worden.

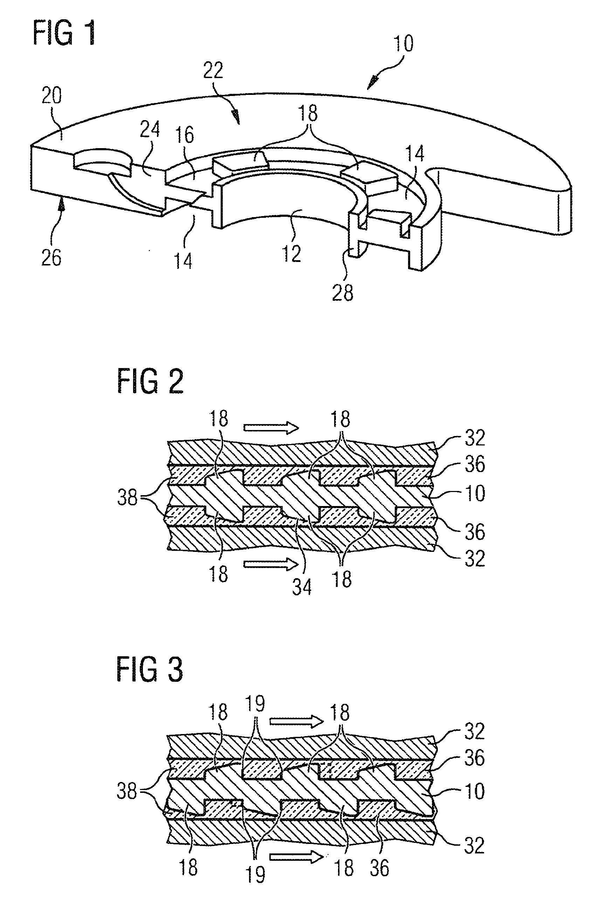

In Fig. 1 ist eine perspektivische Schnittansicht eines Axiallagers 10 dargestellt, wie es gemäß der Erfindung verwendet werden kann. Das Axiallager 10 weist hierbei beispielsweise eine im Wesentlichen flache bzw. scheibenförmige Gestalt auf.

In der Mitte ist das Axiallager 10 mit einer Durchtrittsöffnung 12 versehen, mit der es beispielsweise auf eine Welle eines Abgasturboladers (nicht dargestellt) aufgeschoben werden kann. Darüber hinaus ist das Axiallager 10 auf der Vorder- und Rückseite 22, 26 mit einem vorzugsweise umlaufenden Segmentabschnitt 14 oder Segmentraum, versehen. Der Segmentabschnitt 14 ist dabei in der Form einer Vertiefung 16 ausgebildet.

Hierbei sind Segmente 18 vorgesehen, die in dem Segmentabschnitt 14 angeordnet sind. Die Segmente 18 sind dabei auf den gegenüberliegenden Seiten 22, 26 vollständig zueinander versetzt angeordnet, wie mit Bezug auf Fig. 3 noch detaillierter erläutert wird. Die Segmente 18 sind beispielsweise keilförmig ausgebildet und radial um die Durchtrittsöffnung 12 angeordnet. Grundsätzlich können die Segmente 18 aber auch jede andere Form und Anordnung aufweisen, sowie in einer beliebigen Anzahl vorgesehen werden, je nach Funktion oder Einsatzzweck. Hierbei können die Segmente 18 auch mit einer zusätzlichen Schräge versehen werden, wie im Nachfolgenden in Fig. 3 gezeigt ist.

Des Weiteren ist eine Öltasche 20 auf der ersten Seite 22 des Axiallagers 10 vorgesehen. Die Öltasche 20 ist dabei oberhalb des Segmentabschnitts 14 angeordnet und über einen Kanal 24 mit dem Segmentraum verbunden. Es ist auch denkbar, dass in einer alternativen Ausführungsform der Kanal 24 zusätzlich mit der Durchtrittsöffnung 12 verbunden ist. Der Kanal 24 verbindet beispielsweise die erste und zweite Seite 22, 26 des Axiallagers 10. Auf diese Weise wird eine Ölzufuhr für die Segmentabschnitte 14 auf der ersten und zweiten Seite 22, 26 des Axiallagers 10 bereitgestellt. Der Kanal 24 kann dabei beispielsweise in Form einer Nut ausgebildet werden, wobei die Nut zum Beispiel mittels Fräsen oder Einprägen hergestellt werden kann.

Des Weiteren ist ein Innenbund 28 an der Durchtrittsöffnung 12 des Axiallagers 10 vorgesehen, der den jeweiligen Segmentabschnitt 14 begrenzt. Der Innenbund 28 bewirkt, dass das Schmieröl aus dem jeweiligen Segmentabschnitt 14 nicht ungehindert in den Raum der Durchtrittsöffnung 12 für die Welle gelangt.

In Fig. 2 ist nun eine schematische Ansicht eines Axiallagers 10 gemäß dem Stand der Technik gezeigt, das entlang des mittleren Durchmessers abgewickelt wurde. Dabei ist das Axiallager 10 auf einer Welle zwischen zwei Lagerbünden 32 angeordnet. Das Axiallager 10 weist hierbei auf seiner ersten und zweiten Seite 22, 26 jeweils Segmente 18 auf, die hierbei beispielsweise jeweils zusätzlich mit einer Schräge 34 versehen sind.

Die Segmente 18 sind dabei gemäß dem Stand der Technik symmetrisch einander gegenüberliegend angeordnet. In der Vertiefungen 38 zwischen den Segmenten 18 und zwischen den Lagerbünden 32 und den Segmenten 18 befindet sich ein Ölfilm 36 zur Schmierung des Axiallagers 10. Das Axiallager 10 gemäß dem Stand der Technik hat jedoch den Nachteil, dass im Prägeprozess zum Herstellen der Segmente 18 sehr viel Material auf den gegenüberliegenden Seiten 22, 26 des Axiallagers 10 verdrängt bzw. verformt werden muss. Dies führt dazu, dass die Verfestigung des Werkstoffs verstärkt wird. Je stärker der Werkstoff also bewegt werden muss bzw. je mehr Werkstoff zur Seite gedrängt werden muss, wie hier in Fig. 2 gezeigt ist, umso härter wird der Werkstoff. Dies resultiert in einem stärkeren Verschleiß des entsprechenden Tiefprägewerkzeugs zum Herstellen der Segmente 18. Außerdem ist eine erhebliche Kraft beim Tieferprägen notwendig.

In Fig. 3 ist dagegen ein erfindungsgemäßes Axiallager 10 in einer schematischen Ansicht dargestellt, wobei das Axiallager 10 hierbei beispielsweise den Aufbau, wie das Axiallager 10 in Fig. 1 aufweisen kann. Die Erfindung ist jedoch nicht auf die in Fig. 1 gezeigte Ausführungsform beschränkt, sondern kann auf eine Vielzahl von unterschiedlich geformten Axiallagern angewendet werden, bei denen Segmente auf zwei Seiten des Lagers vorgesehen sind.

Entsprechend wie das Axiallager 10 gemäß Fig. 2 ist auch das Axiallager 10 in Fig. 3 im Gehäuse eines Turboladers auf einer Welle 30 zwischen zwei Lagerbünden 32 angeordnet. Dabei sind die Segmente 18 auf der ersten Seite 22 des Axiallagers 10 abwechselnd bzw. versetzt zu den Segmenten 18 auf der zweiten Seite 26 des Axiallagers 10 angeordnet. Dabei ist ein Ölfilm 36 zum Schmieren des Axiallagers 10 in den Vertiefungen 38 zwischen den Segmenten 18 und beispielsweise zwischen dem jeweiligen Lagerbund 32 und den Segmenten 18 vorgesehen.

Die Segmente 18 können dabei jeweils exakt versetzt auf beiden Seiten 22, 26 des Axiallagers 10 angeordnet sein, so dass kein Spalt zwischen den gegenüberliegenden Segmenten 18 entsteht, wie in Fig. 3 gezeigt ist. Mit anderen Worten, die gegenüberliegenden Segmente 18 überlappen sich gegenseitig nicht, sondern grenzen mit ihren Enden 19 direkt aneinander.

Alternativ können die Segmente 18 oder zumindest ein Teil der Segmente 18 aber auch derart versetzt zueinander auf den gegenüberliegenden Seiten 22, 26 des Lagers 10 angeordnet sein, so dass ein Spalt (nicht dargestellt) zwischen den gegenüberliegenden Segmenten 18 gebildet wird. In diesem Fall wären die Segmente 18 in Fig. 3 beispielsweise etwas auseinandergezogen zueinander angeordnet, so dass zwischen den Enden der gegenüberliegenden Segmente 18 jeweils ein Spalt entsteht.

Bei einem Vergleich der beiden Axiallager 10 gemäß der Fig. 2 und 3 wird deutlich, dass durch die erfindungsgemäße versetzte Anordnung der Segmente 18 der Anteil des zu verformenden Materials sehr viel geringer ist. Dadurch ist die Verfestigung des Materials bei der Erfindung geringer, wobei mit geringerer Kraft höhere Umformungen erzeugt werden können als beim Stand der Technik.

In der Anwendung bzw. dem Herstellungsprozess des Axiallagers 10 ergeben sich keinerlei Nachteile durch die Herstellung der versetzten Anordnung, da es hierbei im Wesentlichen keine Wechselwirkungen zwischen der ersten und zweiten Seite 22, 26 des Axiallagers 10 gibt. Somit sind für die Konstruktion weitere Freiheitsgrade vorhanden, was das Design und den Werkstoff angeht, ohne dass Nachteile im Herstellungsprozess erzeugt werden.

In der Regel wird ein Werkstoff für ein Axiallager 10 beispielsweise nach Gesichtspunkten wie einer geeigneten Umformbarkeit ausgewählt, so wie beispielsweise unter dem Aspekt von Notlaufeigenschaften und Trockengleiten. Gemäß der Erfindung können nun auch Werkstoffe verwendet werden, die zuvor nicht verwendet wurden oder verwendet werden konnten, da ihre Umformbarkeit bei den Lagern des Standes der Technik nicht ausreichend war.

Obwohl die vorliegende Erfindung vorstehend anhand der bevorzugten Ausführungsbeispiele beschrieben wurde, ist sie darauf nicht beschränkt, sondern auf vielfältige Art und Weise modifizierbar. Die zuvor beschriebenen Ausführungsformen sind dabei miteinander kombinierbar, insbesondere einzelne Merkmale davon.

Insbesondere können dabei die Ausführungsbeispiele für die Anordnung der Segmente miteinander kombiniert werden. So kann ein Teil der Segmente vollständig versetzt zueinander angeordnet sein und zusätzlich oder alternativ auch ein Spalt vorgesehen werden zwischen einem Teil der gegenüberliegenden Segmente.

Des Weiteren kann das Axiallager nicht nur für einen Turbolader vorgesehen werden, sondern für eine Vielzahl von weiteren Anwendungen und technischen Gebieten in welchem Axiallager mit Segmenten verwendet werden. Die Ausführung eines Axiallagers, wie es in Fig. 1 dargestellt ist, ist lediglich ein Beispiel für eine Vielzahl von Möglichkeiten ein Axiallager zu gestalten.

## Patentansprüche

1. Axiallager (10), das im Wesentlichen scheibenförmige Gestalt mit einer Vorderseite (22) und einer Rückseite (26), sowie eine mittig angeordnete Durchtrittsöffnung aufweist, wobei das Axiallager auf seiner Vorderseite (22) und seiner Rückseite (26) jeweils mindestens ein oder mehrere Segmente (18) aufweist, wobei die Segmente (18) jeweils in einem als Vertiefung ausgebildeten, um die Durchtrittsöffnung umlaufenden Segmentabschnitt (14) angeordnet sind, **dadurch gekennzeichnet,**
**dass** die Segmente (18) auf den gegenüberliegenden Seiten (22, 26) jeweils zueinander derart vollständig versetzt angeordnet sind, so dass die gegenüberliegenden Segmente (18) mit ihren Enden (19) direkt aneinander angrenzen oder dass jeweils ein Spalt zwischen den Enden (19) der gegenüberliegenden Segmente (18) gegeben ist.

2. Axiallager nach Anspruch 1,
**dadurch gekennzeichnet,**
**dass** die Durchtrittsöffnung (12) auf der Vorder- und/oder Rückseite (22, 26) des Axiallagers (10) einen um die Durchtrittsöffnung (12) umlaufenden Innenbund (28) aufweist, der einen Durchtritt von Schmieröl aus dem Segmentabschnitt (14) hin zu der Durchtrittsöffnung (12) zumindest reduziert.

3. Axiallager nach einem der Ansprüche 1 oder 2,
**dadurch gekennzeichnet,**
**dass** das Axiallager wenigstens eine Öltasche 20 auf der Vorder- und/oder Rückseite (22, 26) aufweist, wobei die Öltasche (20) über eine Nut (24) mit den Segmentabschnitten (14) auf der Vorder- und Rückseite (22, 26) verbunden ist.

4. Axiallager nach einem der Ansprüche 1 bis 3,
**dadurch gekennzeichnet,**
**dass** die Segmente (18) durch Tiefprägen herstellbar sind.

5. Axiallager nach wenigstens einem der Ansprüche 1 bis 4,
**dadurch gekennzeichnet,**
**dass** das Axiallager für einen Turbolader vorgesehen ist.

6. Turbolader mit wenigstens einem Axiallager mit Merkmalen gemäß einem der Ansprüche 1 bis 5.

## Claims

1. Axial bearing (10) having a substantially disc-shaped design with a front side (22) and a rear side (26) as well as a centrally arranged through-opening, with the axial bearing (10) having on its front side (22) and its rear side (26) at least one or more segments (18) in each case, with the segments (18) being arranged in each case in a segment section (14) embodied as a recess running around the through-opening,
**characterised in that**
the segments (18) are arranged completely offset in relation to each other on the opposing sides (22, 26) such that the opposing segments (18) directly adjoin each other with their ends (19) or so that a gap is produced in each case between the ends (19) of the opposing segments (18).

2. Axial bearing according to claim 1,
**characterised in that**
the through-opening (12) features an inner collar (28) running around the through-opening (12) on the front or rear side (22, 26) of the axial bearing (10) which at least reduces the passage of lubricating oil from the segment section (14) to the through-opening (12).

3. Axial bearing according to one of claims 1 or 2,
**characterised in that**
the axial bearing features at least one oil reservoir (20) on the front and/or rear side (22, 26), with the oil reservoir (20) being connected via a channel to the segment sections (14) on the front and rear side (22, 26), for example via a groove (24).

4. Axial bearing according to one of claims 1 to 3,
**characterised in that**
the segments (18) can be produced by deep embossing.

5. Axial bearing according to one of claims 1 to 4,
**characterised in that**
the axial bearing is provided for a turbocharger.

6. Turbocharger with at least one axial bearing according to at least one of claims 1 to 5.

## Revendications

1. Palier axial (10), qui présente une configuration sensiblement en forme de disque avec une face avant (22) et une face arrière (26), ainsi qu'une ouverture de passage agencée de manière centrale, dans lequel le palier axial présente sur sa face avant (22) et sa face arrière (26) respectivement au moins un ou plusieurs segments (18), dans lequel les segments (18) sont respectivement agencés dans une section de segment (14) se présentant sous la forme d'un évidement et longeant l'ouverture de passage,
**caractérisé en ce que**
les segments (18) sont agencés en décalage complet respectivement l'un par rapport à l'autre sur les faces opposées (22, 26) de sorte que les segments (18) opposés se jouxtent directement par leurs extrémités (19) ou qu'un interstice soit respectivement ménagé entre les extrémités (19) des segments (18) opposés.

2. Palier axial selon la revendication 1,
**caractérisé en ce que**
l'ouverture de passage (12) présente sur la face avant et/ou la face arrière (22, 26) du palier axial (10) présente un collet interne (28) longeant l'ouverture de passage (12), lequel au moins réduit un passage d'huile lubrifiante de la section de segment (14) jusqu'à l'ouverture de passage (12).

3. Palier axial selon l'une quelconque des revendications 1 ou 2,
**caractérisé en ce que**
le palier axial présente au moins une poche d'huile 20 sur la face avant et/ou la face arrière (22, 26), dans lequel la poche d'huile (20) est reliée via une rainure (24) aux sections de segments (14) sur la face avant et la face arrière (22, 26).

4. Palier axial selon l'une quelconque des revendications 1 à 3,
**caractérisé en ce que**
les segments (18) peuvent être produits par cambrage.

5. Palier axial selon au moins l'une quelconque des revendications 1 à 4,
**caractérisé en ce que**
le palier axial est destiné à un turbocompresseur.

6. Turbocompresseur avec au moins un palier axial ayant les caractéristiques selon l'une quelconque des revendications 1 à 5.
